# EUROPÄISCHE PATENTANMELDUNG

(11) **EP 2 924 827 A1**
(43) Veröffentlichungstag der Anmeldung: **30.09.2015**
(21) Anmeldenummer: 14162077.3
(22) Anmeldetag: 27.03.2014
(51) Int. Cl.: H02G 3/08, H02G 3/14

(54) **Funktionsbausatz für die Gebäude-Installationstechnik, insbesondere zur Verwendung am Gebäudeeingang**

(71) Anmelder: GIRA GIERSIEPEN GmbH & Co. KG, 42477 Radevormwald (DE)
(72) Erfinder: Krusche, Jürgen, 43074 Aachen (DE); Prescott, Oliver, 52072 Aachen (DE); Klott, Torsten, 52152 Simmerath (DE)
(74) Vertreter: Patentanwälte Dr. Solf & Zapf

(57) **Zusammenfassung**

Die vorliegende Erfindung betrifft einen Funktionsbausatz, insbesondere zur Verwendung in der Gebäude-Installationstechnik z. B. zur Türkommunikation an einem Gebäudeeingang, umfassend einen rahmenförmigen Funktionsträger (1) zum Befestigen von mindestens einem rechteckigen Funktionsmodul (2) und einer das Funktionsmodul (2) an seiner Frontseite abdeckenden Funktionsblende (3). Die Funktionsblende (3) weist an ihrer dem Funktionsmodul (2) zugekehrten Rückseite zwei Passstifte (4) auf, die derart angeordnet sind, dass im montierten Zustand des Funktionsmoduls (2) und der Funktionsblende (3) am Funktionsträger (1) diese durch Durchgangslöcher (6) des Funktionsmoduls (2) verlaufen, die vorzugsweise im Bereich von zwei einander gegenüberliegenden Seitenrändern des Funktionsmoduls (2) ausgebildet sind, und in Passöffnungen (16a, 16b) des Funktionsträgers (1), die ein Passöffnungspaar bilden, mit ihren freien Enden umfangsgemäß formschlüssig, insbesondere mit einem Passungsspiel von 0,03 mm bis 0,17 mm geführt sind.

## Beschreibung

Die vorliegende Erfindung betrifft einen Funktionsbausatz für die Verwendung in der Gebäude-Installationstechnik, insbesondere Türkommunikation am Gebäudeeingang, umfassend einen rahmenförmigen Funktionsträger zum Befestigen von mindestens einem Funktionsmodul und eine das Funktionsmodul an seiner Frontseite abdeckenden Funktionsblende.

Ein derartiger Funktionsbausatz ist in der EP 12161654.4 vom 28. März 2012 beschrieben. Bei einem derartigen Funktionsbausatz ist es wünschenswert, insbesondere aus ästhetischen Gründen, wenn die einzelnen Funktionsmodule mit ihren zugehörigen Funktionsblenden in einem gemeinsamen Funktionsträger derartig befestigt werden können, dass zwischen den einzelnen Funktionsblenden eine exakte Ausrichtung zueinander besteht, wobei zwischen den einzelnen Funktionsblenden ein genaues Spaltbreitenmaß eingehalten werden sollte.

Der vorliegenden Erfindung liegt die Aufgabe zu Grunde, eine derartige exakte Ausrichtung unter Einhaltung eines vorgegebenen Spaltmaßes auf konstruktiv einfache Weise zu gewährleisten.

Erfindungsgemäß wird dies dadurch erreicht, dass die Funktionsblende an ihrer dem Funktionsmodul zugekehrten Rückseite zwei Passstifte aufweist, die derart angeordnet sind, dass sie im montierten Zustand durch Durchgangslöcher des Funktionsmoduls verlaufen, und die Passstifte bzw. die Durchgangslöcher im Bereich von zwei zueinander gegenüberliegenden Seitenwänden des Funktionsmoduls bzw. der Funktionsblende befestigt sind und in Passöffnungen des Funktionsträgers, die ein Passöffnungspaar bilden, mit ihren freien Enden formschlüssig, insbesondere mit einem Passungsspiel von 0,03 mm bis 0,17 mm geführt sind.

Hierbei ist es von Vorteil, wenn eine der Passöffnungen als kreisförmige geschlossene Passöffnung ausgebildet ist, in der der darin befindliche Passstift umfänglich formschlüssig gehalten ist, und die andere Passöffnung als Schlitz ausgeformt ist, in der der jeweilige Passstift in Bezug auf die Schlitzbreite formschlüssig geführt ist.

Erfindungsgemäß ist es von Vorteil, wenn die Passstifte unter einem möglichen Toleranzausgleich in radialer Richtung zur Passstift-Längsachse innerhalb des Funktionsmoduls geführt sind.

Hierzu ist es erfindungsgemäß zweckmäßig, wenn die Durchgangslöcher im Funktionsmodul von einem gummielastischen Dichtkörper umgeben sind, so dass eine schwimmende Lagerung und Dichtfunktion zum Inneren des Funktionsmoduls auf den Passstiften gegeben ist.

Weiterhin ist es erfindungsgemäß zweckmäßig, wenn das jeweilige Funktionsmodul auf den Passstiften mittels Haltemitteln, die lösbar sind, fixiert ist, so dass eine Vormontageeinheit aus dem Funktionsmodul und der dazugehörigen Funktionsblende gebildet wird.

Weitere vorteilhafte Ausführungen der Erfindung sind in den Unteransprüchen enthalten, wobei die Merkmale der einzelnen Unteransprüche unabhängig von den Merkmalen der anderen Unteransprüche für die vorliegende Erfindung wesentlich und zweckmäßig sind.

Durch die vorliegende Erfindung wird erreicht, dass es für die Einhaltung der gewünschten Spaltbreitenmaße nur auf die Passung zwischen den Passstiften der Funktionsblende und den Passöffnungen des Funktionsträgers ankommt, da das dazwischenliegende Funktionsmodul durch den radialen Toleranzausgleich, insbesondere die schwimmende Lagerung nicht passgenau, was die Zuordnung der Durchgangslöcher zu den Passstiften betrifft, ausgebildet sein muss, so dass erfindungsgemäß die Toleranzkette bezüglich des Funktionsträgers, des Funktionsmoduls und der Funktionsblende klein gehalten wird.

Anhand des in den beiliegenden Zeichnungen dargestellten Ausführungsbeispiels wird die Erfindung genauer erläutert werden. Dabei zeigen:
- Fig. 1: eine perspektivische Explosions-Darstellung eines erfindungsgemäßen Funktionsbausatzes,
- Fig. 1a: einen Ausschnitt gemäß A in Fig. 1 in vergrößerter Darstellung,
- Fig. 2: eine perspektivische Ansicht auf die Rückseite eines erfindungsgemäßen Funktionsmoduls mit befestigter Funktionsblende,
- Fig. 3: eine Teilansicht im Bereich eines gesteckten Passstiftes entlang der Schnittlinie A-A in Fig. 2 in perspektivischer Darstellung ohne eingeschobenen Halteschieber,
- Fig. 4: einen Teilschnitt entlang der Schnittlinie B-B in Fig. 2 im Bereich eines eingesteckten Passstiftes in perspektivischer Darstellung mit eingeschobenem Halteschieber,
- Fig. 5: eine nicht geschnittene Darstellung gemäß Fig. 3 mit nicht eingeschobenem Halteschieber.

In den einzelnen Figuren der Zeichnung sind gleiche Teile stets mit denselben Bezugszeichen gekennzeichnet.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

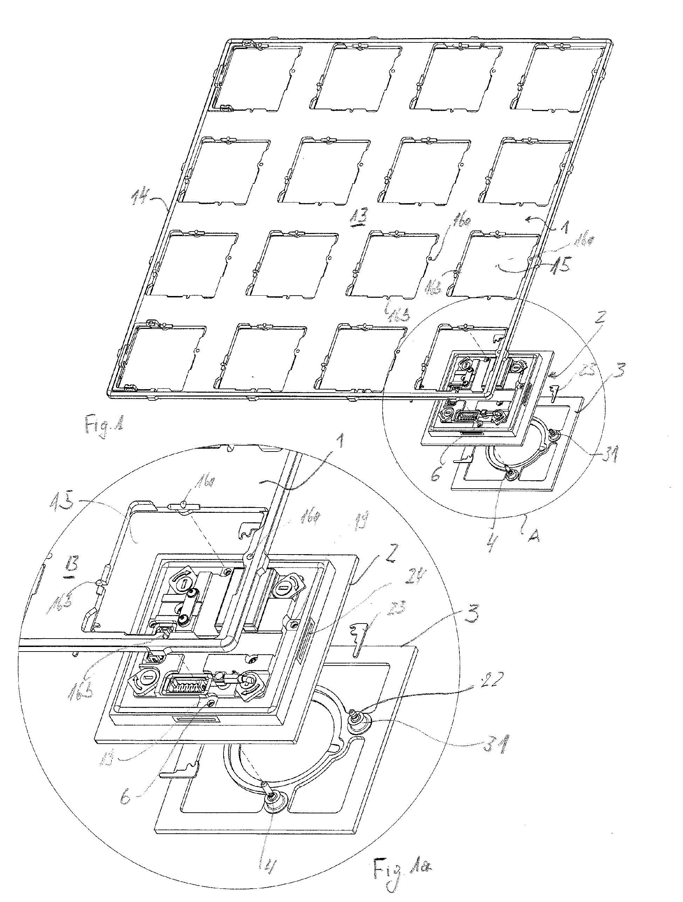

Wie in Fig. 1 und Fig. 1 a beispielhaft dargestellt ist, umfasst ein erfindungsgemäßer Funktionsbausatz einen Funktionsträger 1, mindestens ein Funktionsmodul 2 und eine dem Funktionsmodul 2 zugeordnete Funktionsblende 3, wobei das Funktionsmodul 2 und die Funktionsblende 3 in dem Funktionsträger 1 befestigbar sind.

Die Funktionsblende 3 besitzt auf ihrer dem Funktionsmodul 2 zugekehrten Rückseite zweckmäßigerweise zwei Passstifte 4, die insbesondere durch Kleben an der Funktionsblende 3 befestigt sind. Die Passstifte 4 sind mit ihrer mittleren Längsachse senkrecht zur Rückseitenfläche der Funktionsblende 3 befestigt.

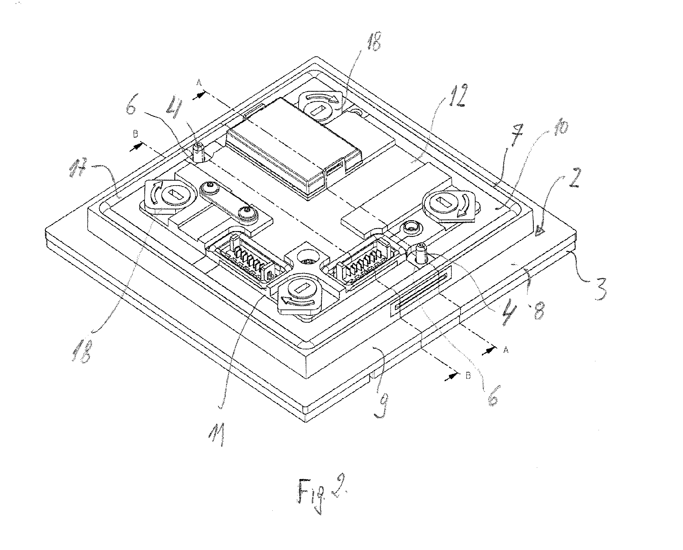

Das Funktionsmodul 2 besitzt zum Durchstecken bzw. zur Aufnahme der Passstifte 4 Durchgangslöcher 6. Die Passstifte 4 haben eine derartige Länge, dass sie im befestigten Zustand des Funktionsmoduls 2 und der Funktionsblende 3 aus den Durchgangslöchern 6 des Funktionsmoduls 2 herausragen, siehe Fig. 2.

Das Funktionsmodul 2 weist ein Gehäuse auf, mit einem Gehäuseunterteil 7 und einem Gehäuseoberteil 8, wobei das Gehäuseunterteil 7 auf einer Rückseite des Funktionsmoduls 2 unter Bildung einer umlaufenden Auflagefläche 9 gegenüber einem Außenrand des Gehäuseoberteils 8 zurückspringt. Das Gehäuseunterteil 7 weist an seiner Rückseite eine umlaufende Anlagefläche 10 auf, die über eine umlaufende Stufe 11 in einen Montage-Gehäuseabschnitt 12 übergeht. Der Funktionsträger 1 ist rahmenförmig ausgebildet und besitzt einen Montageboden 13 und einen den Montageboden 13 umfassenden stegförmigen Trägerrand 14. In dem Montageboden 13 ist mindestens eine Montageöffnung 15 ausgebildet, die zur Aufnahme des Gehäuseunterteils 7 mit seinem Montage-Gehäuseabschnitt 12 dient. Die Montageöffnung 15 ist größenmäßig dem Montage-Gehäuseabschnitt 12 angepasst. Im Montageboden 13 sind am Umfang der jeweiligen Montageöffnung 15 Passöffnungen 16a, 16b ausgebildet, die zur Aufnahme der Passstifte 4 mit ihren aus dem Funktionsmodul 2 herausragenden Enden dienen. Die Passöffnungen 16a, 16b bilden hierbei ein Passöffnungspaar.

Das Funktionsmodul 2 ist umfangsgemäß vorzugsweise rechteckig und insbesondere quadratisch ausgebildet. Die vorstehende Formgebung gilt für das Gehäuseunterteil 7, das Gehäuseoberteil 8 sowie den Gehäuse-Montageabschnitt 12 gleichermaßen.

Die Montageöffnung 15 ist in Anpassung an den Gehäuse-Montageabschnitt 12 rechteckig, insbesondere quadratisch ausgebildet.

Die Funktionsblende 3 ist rechteckig, insbesondere quadratisch ausgebildet, und zwar insbesondere in Anpassung an die Form des Funktionsmoduls 2.

Die Passstifte 4 sind an der Funktionsblende 3 an zwei einander gegenüberliegenden Randbereichen der Funktionsblende 3 befestigt, und zwar z. B. zueinander seitlich versetzt, so dass sie insbesondere nicht unmittelbar einander gegenüberliegend angeordnet sind. Hierbei ist vorzugsweise ein seitlicher Versatz zu einer durch einen Mittelpunkt der Funktionsblendenfläche verlaufenden Mittelsenkrechten vorgesehen. Hierbei sind die beiden Passstifte 4 jeweils in Bezug auf die Mittelsenkrechte auf unterschiedlichen Seiten angeordnet.

Die Durchgangslöcher 6 für die Passstifte 4 im Funktionsmodul 2 sind derart angeordnet, dass sie im Bereich des Gehäuseunterteils 8 durch das Funktionsmodul 2 hindurch verlaufen und im Bereich der Anlagefläche 10 austreten. Dementsprechend ist es notwendig, die Passstifte 4 der jeweiligen dem Funktionsmodul 2 zugehörigen Funktionsblende 3 an die Anordnung der Durchgangslöcher 6 anzupassen. Die Passöffnungen 16a, 16b im Montageboden 13 sind exakt auf die Position der Passstifte 4 an der Funktionsblende 3 ausgerichtet. Hierbei sind die Passöffnungen 16a, 16b unterschiedlich ausgeformt. Die Passöffnung 16a ist z. B. kreisförmig unter Anpassung an einen z. B. kreisförmigen Querschnitt der zugehörigen Passstifte 4 ausgeführt. Hierbei ist insbesondere eine umfangsgemäß formschlüssige Passung, insbesondere mit einem Passungsspiel von 0,03 mm bis 0,17 mm vorgesehen, so dass eine umfangsgemäß formschlüssige Befestigung des Passstiftes 4 in der Passöffnung 16a gegeben ist.

Die andere Passöffnung 16b des Passöffnungspaares ist als Schlitz ausgebildet, wobei dieser Schlitz senkrecht zu einem Öffnungsrand der Montageöffnung 15 verläuft. Die Schlitzbreite ist auf die Form und Größe des Passstiftes 4 angepasst, so dass bezüglich der tangential an den Passstift 4 anliegenden Schlitzkanten eine formschlüssige Passung, insbesondere mit einem Passungsspiel von 0,03 mm bis 0,17 mm gegeben ist.

Die Passstifte 4 besitzen z. B. einen Durchmesser von 3 mm ± 0,05 mm und der Durchmesser der Passöffnung 16a bzw. die Breite der Passöffnung 16b beträgt z. B. 3,1 mm ± 0,02 mm.

Die Positionierung und Passung der Passstifte 4 und der Passöffnungen 16a, 16b ist derart aufeinander abgestimmt, dass ein zwischen mehreren nebeneinander im Funktionsträger 1 montierten Funktionsblenden 3 verlaufender Abstandsspalt ein bestimmtes, festgelegtes Spalt-Breitenmaß einhält. Hierbei ist insbesondere ein Spalt-Breitenmaß von 1,3 mm ± 0,2 mm erfindungsgemäß zweckmäßig. Es kann vorteilhaft sein, wenn zwei aus den Passöffnungen 16a, 16b gebildete Passöffnungspaare vorhanden sind. Hierbei ist das eine Passöffnungspaar aus den Passöffnungen 16a, 16b gegenüber dem anderen Passöffnungspaar um 90 ° versetzt am Umfang der Montageöffnung 15 angeordnet.

Zweckmäßigerweise ist auf der Anlagefläche 10 des Gehäuseunterteils 7 umfänglich eine Umfangsdichtung 17 befestigt, die auch die Durchgangslöcher 6 einschließt. Diese Umfangsdichtung 17 dichtet den Spalt zwischen dem Funktionsmodul 2 und dem Funktionsträgers 1 im montierten Zustand der beiden Teile nach außen ab.

Weiterhin sind gemäß der Erfindung rückseitig am Gehäuse-Montageabschnitt 12, vorzugsweise in allen seinen Ecken, verschwenkbare Haltelaschen 18 gelagert, die zur Befestigung des Funktionsmoduls 2 am Funktionsträger 1 dienen. Wenn der Gehäuse-Montageabschnitt 12 sich innerhalb der Montageöffnung 15 befindet, werden die Haltelaschen 18 derart verschwenkt, dass sie den Rand der Montageöffnung 15 hintergreifen und hierdurch das Funktionsmodul 2 gegenüber dem Funktionsträger 1 fixieren. Durch eine Anpassung der Höhe der Stufe 11 und der Ausbildung der Umfangsdichtung 17 wird auf Grund der elastischen Verformbarkeit der Umfangsdichtung 17 eine unter Vorspannung stehende Fixierung des Funktionsmoduls 2 am Funktionsträger 1 erreicht.

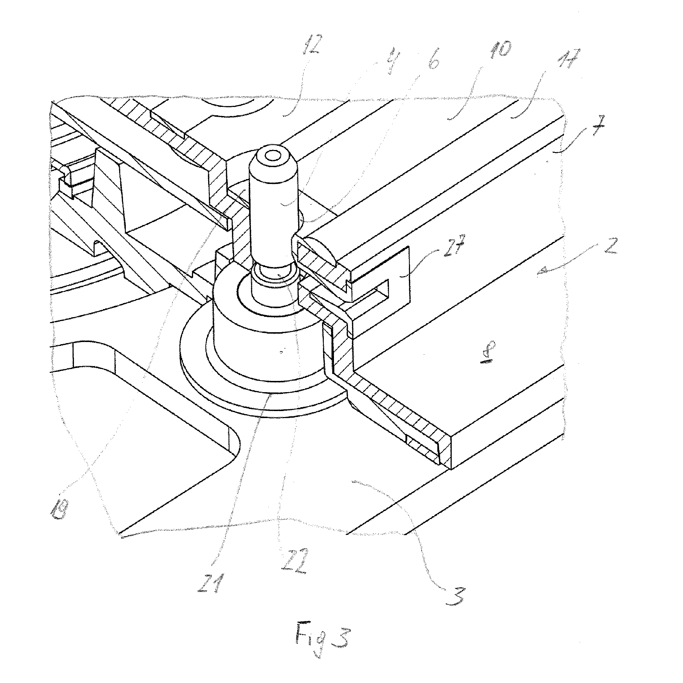

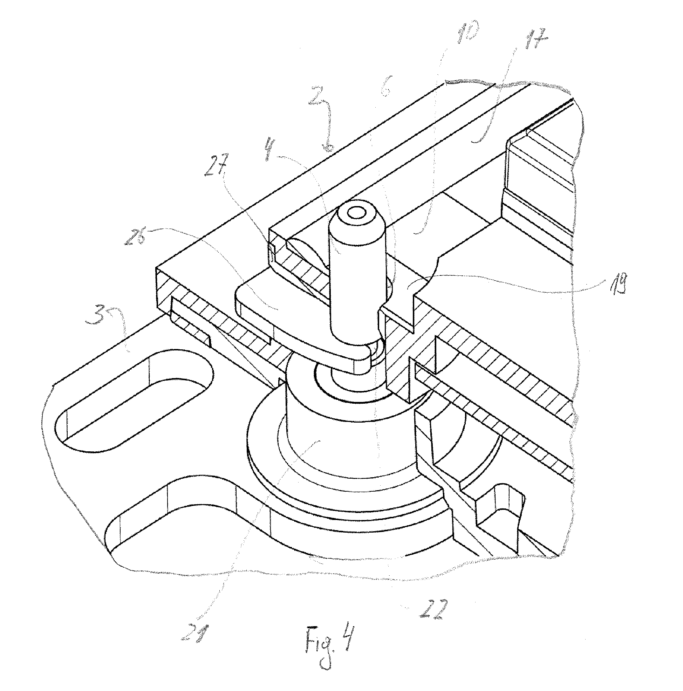

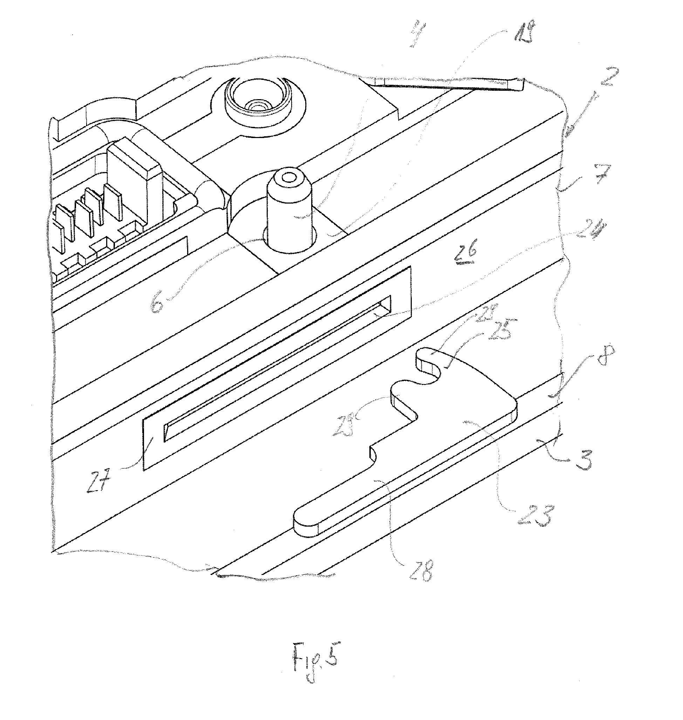

Weiterhin ist es gemäß der Erfindung von Vorteil, wenn die Durchgangslöcher 6 derart ausgebildet sind, dass die Passstifte 4 mit umfangsgemäßem Toleranzausgleich in radialer Richtung in diesem geführt sind. D. h., dass Maßabweichungen in der Lage der Durchgangslöcher 6 keinen Einfluss auf die exakte Positionierung der Funktionsblende 3 am Funktionsträger 1 besitzen, so dass hierdurch das jeweils einzuhaltende Spalt-Breitenmaß zwischen benachbarten Funktionsblenden 3 nicht beeinflusst wird. Erfindungsgemäß ist es hierzu vorteilhaft, wenn die Durchgangslöcher 6 in einem elastisch verformbaren Dichtkörper 19 verlaufen. Dieser Dichtkörper 19 ist innerhalb des Funktionsmoduls 2 integriert. Dieser Dichtkörper 19 bewirkt eine sogenannte schwimmende Lagerung des Funktionsmoduls 2 in Bezug auf die Passstifte 4 und dichtet gleichzeitig eine zwischen den Passstiften 4 und dem Funktionsmodul 2 befindlichen Spaltbereich nach innen und außen ab. Zudem kann es zweckmäßig sein, siehe z. B. Fig. 3 bis 5, wenn die Passstifte 4 einen z. B. zylindrischen Fußabschnitt 21 aufweisen, der eine gegenüber der Querschnittsfläche der Passstifte 4 vergrößerte Fußfläche aufweist. Dies ist von Vorteil, wenn die Passstifte 4 durch Verkleben mit der Funktionsblende 3 verbunden werden, da dadurch die zur Verfügung stehende Klebefläche vergrößert wird. Vorteilhafterweise besteht der Fußabschnitt 21 aus Kunststoff und ist mit dem vorteilhafterweise aus Metall bestehenden übrigen Passstiftbereich durch Spritzgießen verbunden.

Zur Aufnahme des Fußabschnittes 21 weist das Gehäuseunterteil 7 des Funktionsmoduls 2 entsprechende angepasste hohlzylindrische Aufnahmeabschnitte auf.

Zum Befestigen der Funktionsblende 3 am Funktionsmodul 2, so dass diese beiden Teile eine Vormontageeinheit bilden, sind Haltemittel vorteilhaft, die das Funktionsmodul 2 an den Passstiften 4 befestigen.

Im dargestellten Ausführungsbeispiel sind diese Haltemittel aus jeweils einer an dem Passstift 4 ausgebildeten Umfangsnut 22 und einem Halteschieber 23 gebildet. Dieser Halteschieber 23 ist ein Einzelteil und wird durch einen Führungskanal 24 in das Funktionsmodul 2 seitlich in die Umfangsnut 22 des Passstiftes 4 eingeschoben. Hierzu verläuft der Führungskanal 24 durch das Gehäuseunterteil 7 von dessen umfangsgemäßer Seitenfläche 26 nach innen in die Durchgangslöcher 6. Dabei ist der Führungskanal 24 jeweils derart ausgebildet, dass der Halteschieber 23 mit seinem gabelförmigen Kopfteil 25 in seinem eingeschobenen Zustand den jeweiligen Passstift 4 im Bereich der Umfangsnut 22 mit seinen Gabelfortsätzen 29 umgreift. Zweckmäßigerweise ist der Führungskanal 24 derart ausgebildet, dass der Halteschieber 23 im eingeschobenen Zustand formschlüssig in dem Führungskanal 24 gehalten ist. Hierzu ist es zweckmäßig, wenn der Führungskanal 24 eine als Dichtkörper wirkende Auskleidung 27 aus einem gummielastischen Material aufweist, das im eingeschobenen Zustand des Halteschiebers 23 derart elastisch verformt wird, dass eine formschlüssige Halterung desselben gegeben ist. Vorteilhafterweise kann die Auskleidung 27 mit dem Dichtkörper 19 einstückig ausgebildet sein. An das gabelförmige Kopfteil 25 des Halteschiebers 23 ist ein Griffteil 28 angeformt, das zur Handhabung beim Einschieben und Herausziehen des Halteschiebers 23 aus dem Führungskanal 24 dient. Hierbei ist es vorteilhaft, wenn der Halteschieber 23 im eingeschobenen Zustand auf Grund seiner Formgebung nicht aus dem Führungskanal 24 vorsteht.

Alternative Haltemittel können auch z. B. aus auf Gewindeabschnitte der Passstifte 4 aufgeschraubten Haltemuttern oder aus klemmend aufgeschobenen federelastischen Federscheiben bestehen.

Wie in den Fig. 1 und 2 dargestellt ist, kann es zweckmäßig sein, zusätzlich zu den beiden Passstiften 4 zwei Befestigungsstifte 31 jeweils um 90 ° versetzt zu den Passstiften 4 vorzusehen. Dementsprechend weist das Funktionsmodul 2 in diesem Fall vier Durchgangslöcher 6 auf, die in Anpassung an die Positionierung der Befestigungsstifte 31 und der Passstifte 4 im Funktionsmodul 2 ausgebildet sind. Die Befestigungsstifte 31 weisen ebenfalls die Umfangsnut 22 auf und werden wie die Passstifte 4 mittels der Halteschieber 23 fixiert, so dass ebenfalls den Durchgangslöchern 6 zur Aufnahme der Befestigungsstifte 31 Führungskanäle 24 zugeordnet sind. Die Befestigungsstifte 31 haben eine kürzere Länge als die Passstifte 4, so dass sie nicht in die Passöffnungen 16a, 16b im montierten Zustand hineinragen. Was die Ausbildung der Befestigungsstifte 31 im Übrigen betrifft, entspricht sie derjenigen der Passstifte 4.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann.

### Bezugszeichenliste:

- 1: Funktionsträger
- 2: Funktionsmodul
- 3: Funktionsblende
- 4: Passstifte
- 6: Durchgangslöcher
- 7: Gehäuseunterteil
- 8: Gehäuseoberteil
- 10: Anlagefläche
- 11: Stufe
- 12: Montage-Gehäuseabschnitte
- 13: Montageboden
- 14: Trägerrand
- 15: Montageöffnung
- 16a, 16b: Passöffnungen
- 17: Umfangsdichtung
- 18: Haltelaschen
- 19: Dichtkörper
- 21: zylindrischer Fußabschnitt
- 22: Umfangsnut
- 23: Halteschieber
- 24: Führungskanal
- 25: gabelförmiges Kopfteil
- 26: Seitenflächen
- 27: Auskleidung
- 28: Griffteil
- 29: Gabelfortsätze
- 31: Befestigungsstifte

## Patentansprüche

1. Funktionsbausatz, insbesondere zur Verwendung in der Gebäude-Installationstechnik z. B. zur Türkommunikation an einem Gebäudeeingang, umfassend einen rahmenförmigen Funktionsträger (1) zum Befestigen von mindestens einem rechteckigen Funktionsmodul (2) und einer das Funktionsmodul (2) an seiner Frontseite abdeckenden Funktionsblende (3),
**dadurch gekennzeichnet, dass** die Funktionsblende (3) an ihrer dem Funktionsmodul (2) zugekehrten Rückseite zwei Passstifte (4) aufweist, die derart angeordnet sind, dass im montierten Zustand des Funktionsmoduls (2) und der Funktionsblende (3) am Funktionsträger (1) diese durch Durchgangslöcher (6) des Funktionsmoduls (2) verlaufen, die vorzugsweise im Bereich von zwei einander gegenüberliegenden Seitenrändern des Funktionsmoduls (2) ausgebildet sind, und in Passöffnungen (16a, 16b) des Funktionsträgers (1), die ein Passöffnungspaar bilden, mit ihrem freien Enden formschlüssig, insbesondere mit einem Passungsspiel von 0,03 mm bis 0,17 mm geführt sind.

2. Funktionsbausatz nach Anspruch 1,
**dadurch gekennzeichnet, dass** dasFunktionsmodul(2)auf den Passstiften (4) mittels lösbarer Haltemittel (22, 23) befestigbar ist.

3. Funktionsbausatz nach Anspruch 2,
**dadurch gekennzeichnet, dass** die Haltemittel aus in senkrecht zu den Durchgangslöchern (6) des Funktionsmoduls (2) verlaufenden, randoffenen Führungskanälen (24) einschiebbaren und in diesen geführten Halteschiebern (23) bestehen, die in Umfangsnuten (22) der Passstifte (4) eingreifen.

4. Funktionsbausatz nach Anspruch 2,
**dadurch gekennzeichnet, dass** die Haltemittel aus auf Gewindeabschnitte der Passstifte (4) aufschraubbaren Muttern oder aufsteckbaren Federscheiben bestehen.

5. Funktionsbausatz nach einem der Ansprüche 1 bis 4,
**dadurch gekennzeichnet, dass** einederPassöffnungen(16a, 16b) als kreisförmig geschlossene Passöffnung (16a) ausgebildet ist, in der der zugehörige Passstift (4) formschlüssig umfänglich geführt ist und die andere Passöffnung (16b) als Schlitz ausgebildet ist, in der dem der jeweilige Passstift (4) in Bezug auf die Schlitzbreite formschlüssig gehalten ist.

6. Funktionsbausatz nach einem der Ansprüche 1 bis 5,
**dadurch gekennzeichnet, dass** diePassstifte(4)einen Fußabschnitt (22) aufweisen, dessen Fußfläche gegenüber der Querschnittsfläche der Passstifte (4) vergrößert ist und auf der Funktionsblende (3) durch Kleben befestigt ist.

7. Funktionsbausatz nach einem der Ansprüche 1 bis 6,
**dadurch gekennzeichnet, dass** diePassstifte(4)inden Durchgangslöchern (6) umfangsgemäß radial zu einer Lochlängsachse mit einem Toleranzausgleich geführt sind.

8. Funktionsbausatz nach Anspruch 7,
**dadurch gekennzeichnet, dass** die Durchgangslöcher (6) im Funktionsmodul (2) von einem gummielastischen Dichtkörper (19) umgeben sind, so dass zum Toleranzausgleich eine schwimmende Lagerung des Funktionsmoduls (2) auf den Passstiften (4) gegeben ist.

9. Funktionsbausatz nach einem der Ansprüche 1 bis 8,
**dadurch gekennzeichnet, dass** beiden Passstifte (4) und die die Passöffnungen (16a, 16b) bildenden Passöffnungspaare seitlich zueinander versetzt zu einer Mittelsenkrechten durch den Mittelpunkt der Grundfläche des Funktionsmoduls (2) bzw. der Funktionsblende (3) seitlich zueinander versetzt angeordnet sind.

10. Funktionsbausatz nach einem der Ansprüche 1 bis 9,
**dadurch gekennzeichnet, dass** der Funktionsträger (1) pro Montageöffnung (15) jeweils zwei um 90 ° zueinander versetzt angeordnete Passöffnungspaare der Passöffnungen (16a, 16b) aufweist.

11. Funktionsbausatz nach einem der Ansprüche 1 bis 10,
**dadurch gekennzeichnet, dass** im Funktionsträger (1) Montageöffnungen (15) ausgebildet sind, durch die die Funktionsmodule (2) mit ihrem Montage-Gehäuseabschnitt (12) verlaufen und die Funktionsmodule (2) an ihrer Rückseite schwenkbare Haltelaschen (18) aufweisen, die im montierten Zustand der Funktionsmodule (2) am Funktionsträger (1) diesen im Randbereich der Montageöffnungen (15) hintergreifen.

12. Funktionsbausatz nach einem der Ansprüche 1 bis 11,
**dadurch gekennzeichnet, dass** aufderAnlagefläche(10)des Gehäuseunterteils (7) eine umlaufende Umfangsdichtung (17) aus elastisch verformbaren Material angeordnet ist.

13. Funktionsbausatz nach einem der Ansprüche 1 bis 12,
**dadurch gekennzeichnet, dass** zwischen der Anlagefläche (10) und dem Montage-Gehäuseabschnitt (12) eine umlaufende Stufe (11) ausgebildet ist.

14. Funktionsbausatz nach einem der Ansprüche 1 bis 13,
**dadurch gekennzeichnet, dass** um 90° zu den Passstiften (4) versetzt Befestigungsstifte (31) an der Rückseite der Funktionsblende (3) angeordnet sind, die in Durchgangslöchern (6) des Funktionsmoduls (2) geführt sind.
